(19) Europäisches Patentamt
European Patent Office
Office européen des brevets

(11) **EP 3 920 027 A1**

(12) **EUROPEAN PATENT APPLICATION**

(43) Date of publication:
08.12.2021 Bulletin 2021/49

(51) Int Cl.:
*G06F 9/50* (2006.01)

(21) Application number: 21161994.5

(22) Date of filing: 11.03.2021

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **05.06.2020 JP 2020098786**<br><br>(71) Applicant: **FUJITSU LIMITED**<br>**Kanagawa 211-8588 (JP)** | (72) Inventors:<br>• **Yamaoka, Hisatoshi**<br>**Kanagawa, 211-8588 (JP)**<br>• **Okabayashi, Miwa**<br>**Kanagawa, 211-8588 (JP)**<br><br>(74) Representative: **Hoffmann Eitle**<br>**Patent- und Rechtsanwälte PartmbB**<br>**Arabellastraße 30**<br>**81925 München (DE)**<br><br>Remarks:<br>Amended claims in accordance with Rule 137(2) EPC. |

(54) **METHOD OF DETERMINING PIPELINE DIVISION POSITION, INFORMATION PROCESSING APPARATUS, AND PROGRAM**

(57) A method of determining a pipeline division position includes receiving, by a computer, first information on a pipeline that includes a plurality of nodes that represent arithmetic operations, and second information on an amount of communication between nodes at each of a plurality of division positions at which the pipeline is divided, and selecting a division pattern from a plurality of division patterns, each of which includes at least one division position, based on the amount of communication at the at least one division position included in each of the division patterns and a node number of each of partial pipelines after division in each of the division patterns.

FIG. 4

EP 3 920 027 A1

**Description**

FIELD

The embodiment discussed herein is related to a method of determining a pipeline division position, an information processing apparatus, and a program.

BACKGROUND

In the distributed stream processing platform, inflowing data and "arithmetic operations" such as filtering, machining, classifying, and aggregating for the data are connected to each other to execute as a service by pipeline processing.

For a service, another service is added to the latter stage of a pipeline that makes up the service, and by running a plurality of services, data generated by the service are inherited by other services, which makes it possible to calculate data even more valuable.

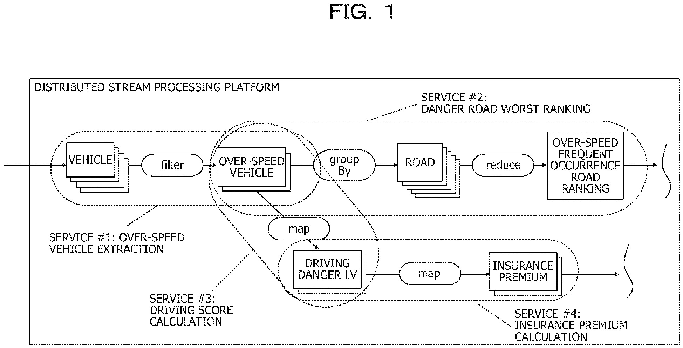

FIG. 1 is a diagram illustrating an example in which a plurality of services are configured on a distributed stream processing platform.

FIG. 1 illustrates an example of four services defined on the distributed stream processing platform, in which "vehicle" and "over-speed vehicle" indicated by rectangles represent data and "filter" and "groupBy" indicated by rounded rectangles represent arithmetic operations in the services. First, service #1 performs a filter arithmetic operation for traveling data of a vehicle uploaded from a connected car or the like to extract a speed value included in the data that is equal to or higher than a threshold value, and holds the result as "over-speed vehicle" as data. Service # 2 classifies the "over-speed vehicle" data generated by service #1 for each road on which the vehicle is traveling, and calculates data of the number of vehicles exceeding the speed limit for each road. Further, service #2 calculates the worst ranking of roads regarding the number of vehicles exceeding the speed limit based on data of vehicles exceeding the speed limit for all roads. Similarly, service #3 calculates a safe driving score of each vehicle for the "over-speed vehicle" data, and service #4 calculates insurance premiums using the data.

Related techniques are disclosed in, for example, International Publication Pamphlet No. WO2017/104072 and International Publication Pamphlet No. WO2014/041673.

In the distributed stream processing platform, data and arithmetic operations that make up a stream are distributed and arranged on a plurality of computers (in other words, machines) that make up the stream, and are executed in parallel at the same time. Therefore, when an arithmetic operation is performed on the data, the data distributed and arranged in machine groups need to be converted and held in the machines again, and thus, a communication between the machines occurs. In order to perform the communication, a communication buffer memory needs to be secured in advance, and thus, the number of communication stages needs to be determined in advance. The number of communication stages is not equal to the number of arithmetic operations, and is determined based on the sequence and dependency of arithmetic operations that make up a pipeline. Specifically, a number of stages as a result of topological sorting of pipelines is the number of stages.

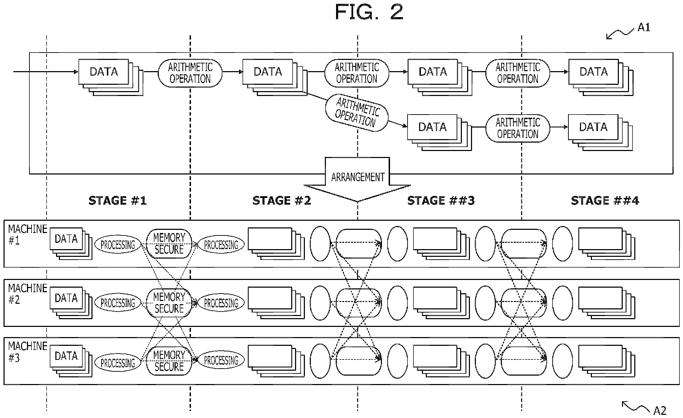

FIG. 2 is a diagram schematically illustrating the number of stages (see, *e.g.,* the reference numeral A2) for distributing and arranging data and arithmetic operations (see, *e.g.,* the reference numeral A1) that make up a defined pipeline for a plurality of machines.

In FIG. 2, a sufficient communication buffer memory needs to be secured in order to smoothly perform the arithmetic operations in the pipeline and the inter-machine communication generated for each stage of the pipeline.

When the number of stages is easily increased, it may run out of memory, and thus, the platform itself may not start. Therefore, the number of stages needs to be reduced to 10 or less at the most, which may cause a possibility that branch, reconnection, and addition of pipelines may not be flexibly performed.

Therefore, while it may be conceived to physically increase the memory, the memory mounting capacity per machine is limited, and thus, only a limited effect may be obtained.

Further, while it may be conceived to perform an optimization such as combining two arithmetic operations into one thereby reducing the stage consumption, there exist arithmetic operations such as classification (groupBy) and aggregation that may not be executed unless stages are divided, and thus, only a limited effect may be obtained.

It is an object in one aspect of the embodiment to enable branch, reconnection, and addition of pipelines to be performed flexibly.

SUMMARY

According to an aspect of the embodiment, a method of determining a pipeline division position includes receiving, by a computer, first information on a pipeline that includes a plurality of nodes that represent arithmetic operations, and second information on an amount of communication between nodes at each of a plurality of division positions at which the pipeline is divided, and selecting a division pattern from a plurality of division patterns, each of which includes at least one division position, based on the amount of communication at the at least one division position included in each of the division patterns and a node number of each of partial pipelines after division in each of the division patterns.

According to an aspect of the embodiment, it is possible to perform branch, reconnection, and addition of pipelines flexibly.

BRIEF DESCRIPTION OF DRAWINGS

FIG. 1 is a block diagram illustrating an example in which a plurality of services are configured on a distributed stream processing platform;
FIG. 2 is a diagram schematically illustrating the number of stages for distributing and arranging data and arithmetic operations that make up a defined pipeline for a plurality of machines;
FIG. 3 is a diagram illustrating a division of a pipeline in an example of an embodiment;
FIG. 4 is a block diagram schematically illustrating an example of a hardware configuration of an information processing apparatus according to an example of the embodiment;
FIG. 5 is a block diagram schematically illustrating an example of a software configuration of the information processing apparatus illustrated in FIG. 4;
FIG. 6 is a diagram illustrating a first example of the division of a pipeline by an optimum division process in an example of the embodiment;
FIG. 7 is a diagram illustrating a second example of the division of the pipeline by the optimum division process in an example of the embodiment;
FIG. 8 is a diagram illustrating a division pattern selection screen in an example of the embodiment;
FIG. 9 is a diagram illustrating an exclusion division pattern in the optimum division process in an example of the embodiment;
FIG. 10 is a flowchart illustrating an optimum division process in an initial arrangement phase in an example of the embodiment; and
FIG. 11 is a flowchart illustrating an optimum division process in an operation phase in an example of the embodiment.

DESCRIPTION OF EMBODIMENT

Hereinafter, an embodiment will be described with reference to the accompanying drawings. However, the embodiment described herein below is merely an example, and is not intended to exclude an application of various modifications and techniques that are not explicitly specified in the embodiment. That is, the embodiment may be modified and implemented in various ways without departing from the gist of the present disclosure.
Further, each drawing is not intended to include only the components illustrated therein, and may include other functions and the like.
Hereinafter, throughout the drawings, the same reference numerals denote the same components, and thus, overlapping descriptions thereof will be omitted.

(A) Example of Embodiment

(A-1) Example of System Configuration

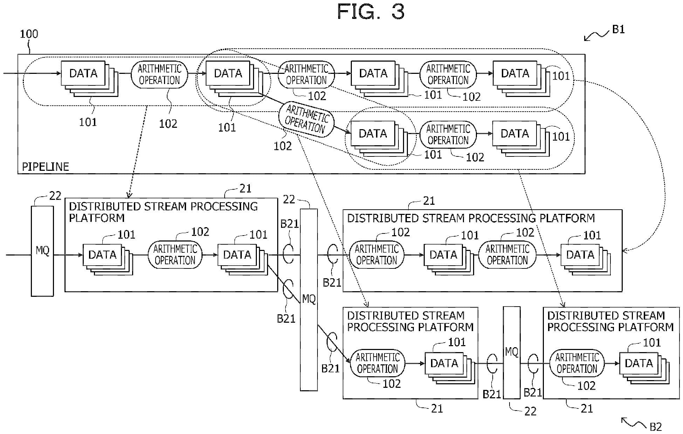

FIG. 3 illustrates an example in which a pipeline 100 defined on one distributed stream processing platform 21 (in other words, a machine) as indicated by a reference numeral B1 is divided into a plurality of pipelines 100, and then, individually arranged on a plurality of distributed stream processing platforms 21, as indicated by a reference numeral B2.
As illustrated in FIG. 3, in the configuration in which the pipeline 100 is divided and separately arranged on the plurality of machines, the number of data and arithmetic operations to be stored per distributed stream processing platform 21 is reduced, compared with the configuration in which all pipelines 100 operate on one distributed stream processing platform 21. Therefore, although in the past it was only possible to deal with the increase in memory consumption due to the increase in arithmetic operations in a pipeline by increasing the installed memory of the machines that make up the distributed stream processing platform 21 (in other words, scale-up), it is possible to deal with the increase in memory consumption by increasing the distributed stream processing itself (in other words, scale-out). In general, the scale-out may be preferable to the scale-up in terms of costs because it is more effective in terms of costs to increase the number of relatively low-performance machines than to improve the performance of the machines.

As indicated by a reference numeral B21, serialization/deserialization, JSON parsing, Kafka protocol conversion, etc., are executed between the distributed stream processing platform 21 and a MQ 22, which causes the increase in processing costs.

That is, while the number of stages for each distributed stream processing platform 21 can be reduced by division of the pipeline 100, communication across the distributed stream processing platform 21 causes a processing delay. Therefore, the division is performed to reduce the communication across the distributed stream processing platform 21.

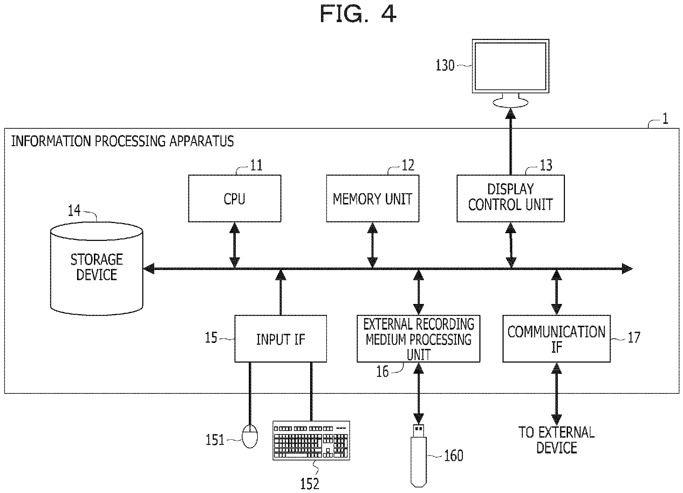

FIG. 4 is a block diagram schematically illustrating an example of a hardware configuration of an information processing apparatus 1 in an example of the embodiment.

As illustrated in FIG. 4, an information processing apparatus 1 includes a central processing unit (CPU) 11, a memory unit 12, a display control unit 13, a storage device 14, an input interface (IF) 15, an external recording medium processing unit 16, and a communication IF 17.

The memory unit 12 is an example of a storage unit and is, for example, a read only memory (ROM), a random access memory (RAM), and the like. A program such as a basic input/output system (BIOS) may be written in the ROM of the memory unit 12. A software program of the memory unit 12 may be appropriately read and executed by the CPU 11. Further, the RAM of the memory unit 12 may be used as a temporary recording memory or a working memory.

The display control unit 13 is connected to a display device 130 and controls the display device 130. The display device 130 is a liquid crystal display, an organic light-emitting diode (OLED) display, a cathode ray tube (CRT), an electronic paper display, or the like, and displays various types of information to an operator or the like. The display device 130 may be a device combined with an input device, such as a touch panel.

The storage device 14 is a storage device having a high input/output (IO) performance and may be, for example, a dynamic random access memory (DRAM), a solid state drive (SSD), a storage class memory (SCM), or a hard disk drive (HDD).

The input IF 15 may be connected to an input device such as a mouse 151 or a keyboard 152 to control the input device such as the mouse 151 or the keyboard 152. The mouse 151 and the keyboard 152 are examples of input devices, and an operator performs various input operations through the input devices.

The external recording medium processing unit 16 is configured to allow a recording medium 160 to be mounted thereto. The external recording medium processing unit 16 is configured to be able to read information recorded on the recording medium 160 in a state where the recording medium 160 is mounted to the external recording medium processing unit 16. In this example, the recording medium 160 is portable. For example, the recording medium 160 is a flexible disk, an optical disc, a magnetic disk, a magneto-optical disc, a semiconductor memory, or the like.

The communication IF 17 is an interface for enabling a communication with an external device.

The CPU 11 is a processing device that performs various controls and arithmetic operations, and implements various functions by executing an operating system (OS) or a program stored in the memory unit 12.

The device that controls the operation of the entire information processing apparatus 1 is not limited to the CPU 11, but may be, for example, any one of a MPU, DSP, ASIC, PLD, and FPGA. Further, the device that controls the operation of the entire information processing apparatus 1 may be a combination of two or more of the CPU, MPU, DSP, ASIC, PLD, and FPGA. The MPU is an abbreviation for Micro Processing Unit, DSP is an abbreviation for Digital Signal Processor, and the ASIC is an abbreviation for Application Specific Integrated Circuit. The PLD is an abbreviation for Programmable Logic Device, and the FPGA is an abbreviation for Field Programmable Gate Array.

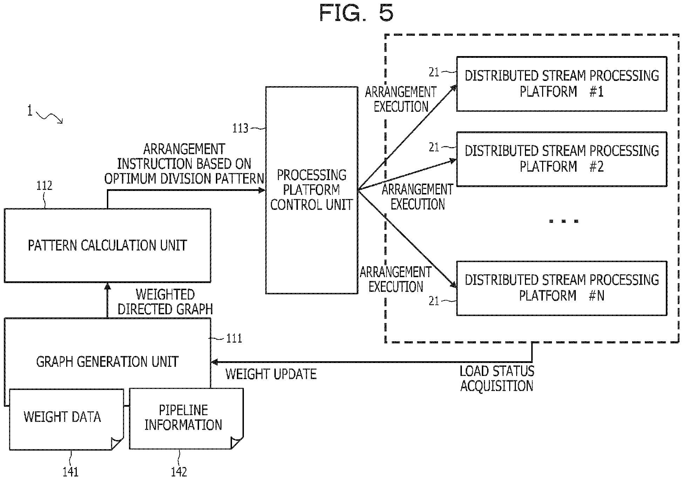

FIG. 5 is a block diagram schematically illustrating an example of a software configuration of the information processing apparatus 1 illustrated in FIG. 4.

The information processing apparatus 1 functions as a graph generation unit 111, a pattern calculation unit 112, and a processing platform control unit 113.

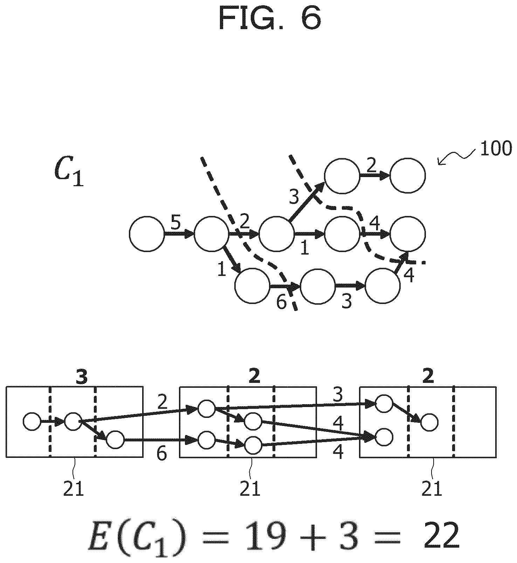

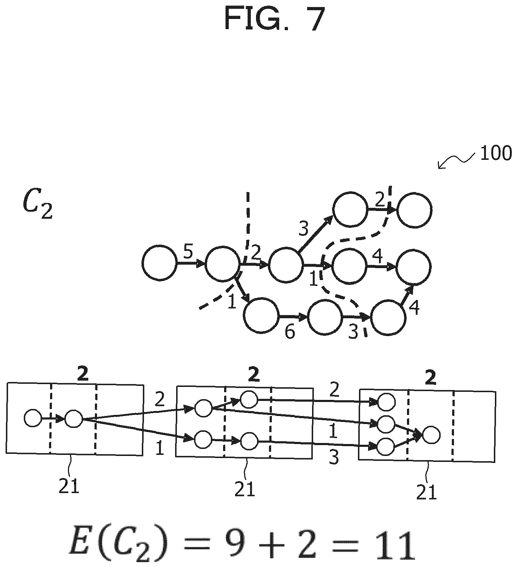

The graph generation unit 111 generates a weighted directed graph based on weight data 141 and pipeline information 142. Details of a weighted directed graph generation process will be described later with reference to FIGs. 6 and 7 and the like.

The weight data 141 indicates the amount of communication expected between nodes in the pipeline 100 (*e.g.,* data 101 and arithmetic operations 102 illustrated in FIG. 3). The pipeline information 142 is information indicating the design of the pipeline 100 such as the connection, number, and the like of the data 101 and arithmetic operations 102.

The graph generation unit 111 may acquire the load status of the distributed stream processing platform 21 and update the weight data 141.

The pattern calculation unit 112 calculates the optimum division pattern of the pipeline 100 based on the weighted directed graph generated by the graph generation unit 111, and instructs the processing platform control unit 113 to arrange the distributed stream processing platform 21. The details of a calculation process of the optimum division pattern will be described later with reference to FIGs. 6 and 7 and the like.

The processing platform control unit 113 executes the arrangement of the distributed stream processing platform 21 (distributed stream processing platforms #1 to #N in the illustrated example) based on the arrangement instruction from the pattern calculation unit 112.

FIG. 6 is a diagram illustrating a first example of division of the pipeline 100 by an optimum division process in an example of the embodiment, and FIG. 7 is a diagram illustrating a second example thereof.

FIGs. 6 and 7 illustrate examples of dividing the pipeline 100 and energy values indicating the efficiency of the division. It is assumed that the lower the energy value, the better the division efficiency.

A directed graph in each of the figures is a model of the pipeline 100. Nodes (circles) in the directed graph represent data in the pipeline 100, and edges (arrows) represent arithmetic operations. A numerical value above each edge represents the amount of communication generated by an arithmetic operation corresponding to the edge, and dotted lines across the edges indicate that the pipeline 100 is divided along the dotted lines to be divided into a plurality of pipelines 100.

The total energy value of a division pattern $C_1$ illustrated in FIG. 6 is 22. This breakdown is a value obtained by adding 3, which is the maximum length of the partial pipeline after the division (e.g., the distributed stream processing platform 21), to the total amount of communication (2+6+3+4+4=19) generated by a division.

In contrast, the total energy value of a division pattern $C_2$ illustrated in FIG. 7 is 11. The breakdown is the total amount of communication (1+2+2+1+3=9) plus 2 which is the maximum pipeline length after the division.

For both $C_1$ and $C_2$, $\alpha$ and $\beta$ in an energy calculation expression (see below) are set to 1. Further, an expression <argmax len(C)> is adopted for a sub-graph length after the division. This expression evaluates the sub-graph length by the variance instead of the maximum length. When comparing the energy values $E(C_1)$=21 of $C_1$ and $E(C_2)$=11 of $C_2$, $E(C_2)$ is smaller. Since the energy value is a value determined according to the amount of communication generated by the division and the stage length (=the amount of memory consumption) of the sub-graph, it is better in terms of overall efficiency to perform the division according to the $C_2$ method with a small increase in amount of communication + amount of memory consumption.

The graph generation unit 111 generates the directed graphs $C_1$ and $C_2$ with edges weighted according to the amount of communication, as illustrated in FIGs. 6 and 7. The weight data 141 may be defined in advance according to, for example, the arithmetic operation type (filter, map, groupby, etc.) between the nodes (in other words, the data 101 and the arithmetic operations 102 illustrated in FIG. 3), the data frequency, and the size declaration.

The pattern calculation unit 112 calculates a division pattern that minimizes an energy function E(C) represented by the following equation.

$$E(C) = \alpha \sum_i \omega_i + \beta V(C)$$

Where, a and $\beta$ are arbitrary coefficients (in other words, optimization parameters), i is a natural number for identifying a division boundary, and $\omega_i$ is the weight of the division boundary. V(C) is represented by the following equation.

$$V(C) = \begin{cases} ar\,gmax\,len(C) & \cdots (1) \\ \frac{1}{n}\sum_k^n \left(\overline{len(C)} - len(C_k)\right)^2 & \cdots (2) \end{cases}$$

The above expression (1) is adopted when the maximum stage length of a machine (*e.g.,* a node group) is reduced. The above expression (2) is adopted when the stage lengths of machines are made equal.

Further, $\alpha$ and $\beta$ are determined depending on which of a reduction of the communication load and a reduction of the memory load is emphasized.

Assuming that $\alpha$ and $\beta$=1, the energy functions of the directed graphs $C_1$ and $C_2$ are as follows.

$$E(C_1)=(2+6+3+4+4)+3=22$$

$$E(C_2)=(2+1+2+1+3)+2=11$$

The pattern calculation unit 112 instructs the processing platform control unit 113 to arrange the distributed stream processing platform 21 according to the division pattern of $E(C_2)$ having the smallest value of $E(C_1)$ and E(C2).

In other words, the pattern calculation unit 112 determines a division position based on the amount of communication at the division position and a node number of each of the partial pipelines after the division. The pattern calculation unit 112 calculates the minimum value of an index indicated by the amount of communication between node groups (e.g., the distributed stream processing platforms 21) including at least some of a plurality of nodes that make up the pipeline 100 and the amount of consumption of memory resources in the node groups. The processing platform control unit 113 determines the division position by a combination of node groups indicating the calculated minimum value of the index and displays information of the determined division position on a screen provided to a system administrator. Alternatively, the pipeline 100 after the division at the division position is arranged.

The pattern calculation unit 112 may re-determine the division position when the amount of change between the current amount of communication and the amount of communication at the timing of arrangement of the pipeline 100 after the previous division is equal to or greater than a threshold value.

The number of combinations of division patterns is represented by $r^n$, where r is the number of divisions and n is the number of the nodes. For example, when the pipeline 100 having 20 nodes is divided into three distributed stream processing platforms 21, the number of combinations of division patterns is $3^{20}=3,486,784,401$, which is an enormous value.

Since it is not easy to find the true optimal solution, an approximate solution may be found by a meta-heuristic optimization algorithm. For example, a tabu search, genetic algorithm, simulated annealing, quantum annealing (D-wave, DA, etc.) may be applied as the meta-heuristic optimization algorithm.

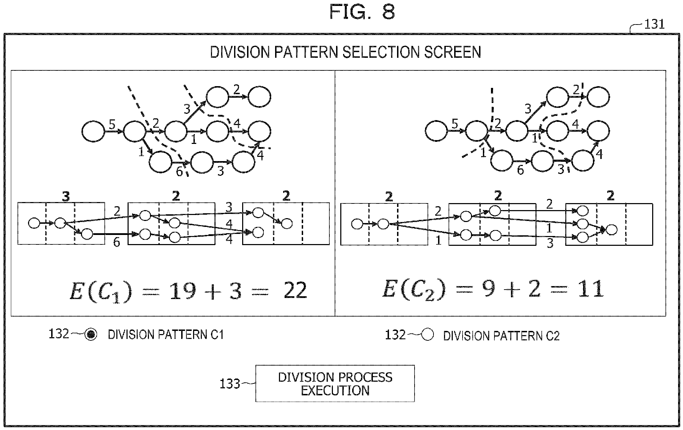

FIG. 8 is a diagram illustrating a division pattern selection screen 131 in an example of the embodiment.

A user may select an arbitrary division pattern from a plurality of division pattern candidates presented by the information processing apparatus 1.

The division pattern selection screen 131 illustrated in FIG. 8 is displayed on the display device 130 illustrated in FIG. 4, and displays the division pattern $C_1$ illustrated in FIG. 6 and the division pattern $C_2$ illustrated in FIG. 7 as division pattern candidates.

The user may select an arbitrary division pattern by, for example, a radio button 132. In the illustrated example, the division pattern $C_1$ is selected.

Then, the user may instruct the processing platform control unit 113 to perform a division process by clicking a division process execution button 133.

As illustrated, since the division pattern selection screen 131 includes the energy amount and the division position of each division pattern, the user may determine a division position to be adopted, by confirming a difference between the energy amount and the division position of each division pattern.

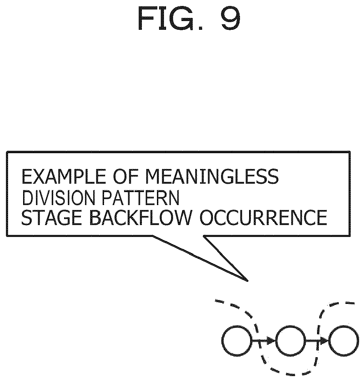

FIG. 9 is a diagram illustrating an exclusion division pattern in the optimum division process in an example of the embodiment.

As illustrated in FIG. 9, a meaningless division pattern that causes stage backflow may be excluded from a combination to be calculated.

(A-2) Example of Operation

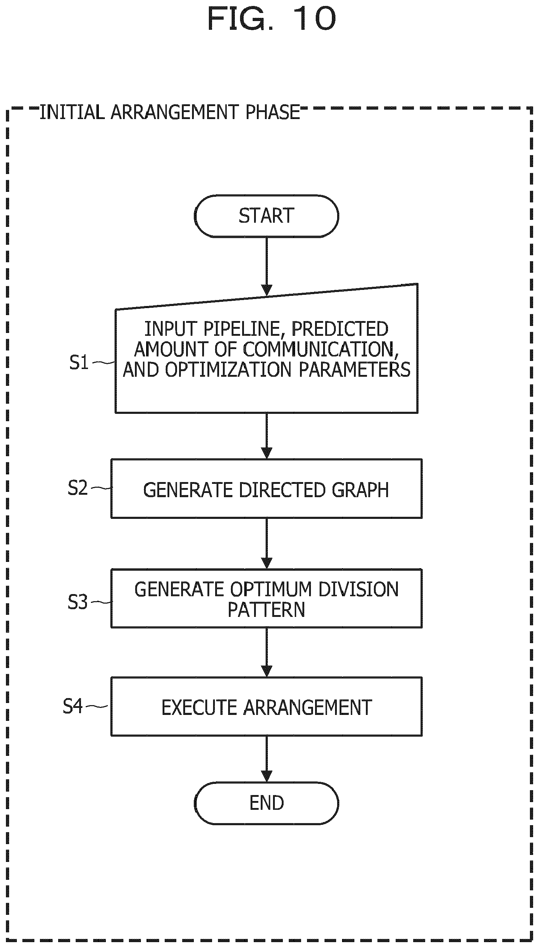

The optimum division process in an initial arrangement phase in an example of the embodiment will be described with reference to a flowchart (steps S1 to S4) illustrated in FIG. 10.

The graph generation unit 111 receives inputs of the pipeline 100, the predicted amount of communication, and the optimization parameters $\alpha$ and $\beta$ (step S1).

The graph generation unit 111 generates a directed graph (step S2).

The pattern calculation unit 112 calculates and generates an optimum division pattern (step S3).

The processing platform control unit 113 executes the arrangement of the distributed stream processing platform 21 based on the generated optimum division pattern (step S4). Then, the optimum division process in the initial arrangement phase ends.

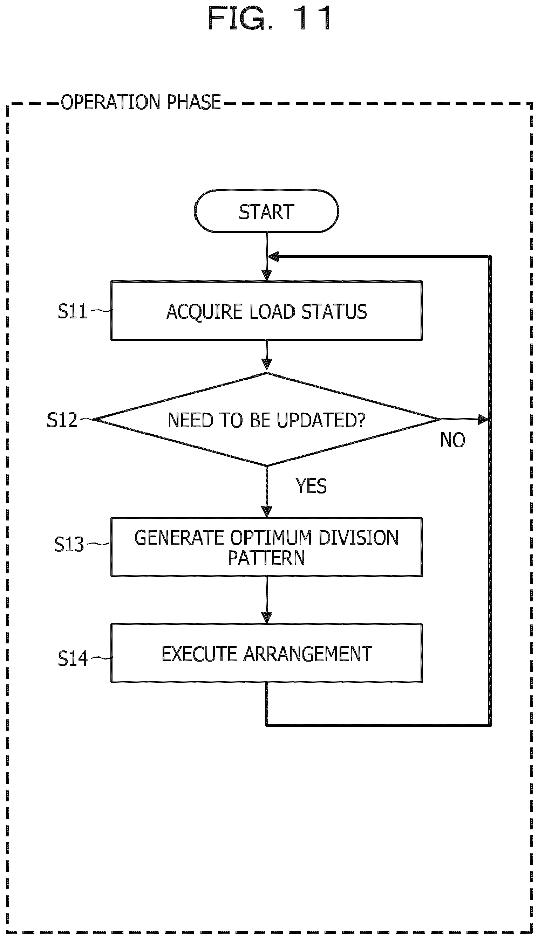

Next, the optimum division process in an operation phase in an example of the embodiment will be described with reference to a flowchart (steps S11 to S14) illustrated in FIG. 11.

The graph generation unit 111 acquires the load status from each distributed stream processing platform 21 (step S11).

The graph generation unit 111 determines whether or not a weighted directed graph needs to be updated (step S12). For example, it is determined whether or not the amount of change in the total value of weights at a division boundary is equal to or greater than a threshold value.

When it is determined that the weighted directed graph does not need to be updated (see the NO route in step S12), the process returns to step S11.

Meanwhile, when it is determined that the weighted directed graph needs to be updated (see, *e.g.,* the YES route in step S12), the pattern calculation unit 112 calculates and generates an optimum division pattern (step S13).

The processing platform control unit 113 executes the arrangement of the distributed stream processing platform 21 based on the generated optimum division pattern (step S14). Then, the process returns to step S11.

(A-3) Effects

The pattern calculation unit 112 determines a division position based on the amount of communication at the division position and the node number of each of partial pipelines after the division.

As a result, a branch, reconnection, and addition of the pipeline 100 may be flexibly performed. Specifically, by driving the pipeline 100 in a divided manner, there are no restrictions on the number of stages, which enables a plurality of developers to flexibly change the design of the pipeline 100. Further, since an increase in the amount of communication due to the divided drive of the pipeline 100 may be suppressed, it is possible to prevent a processing delay due to communication between the distributed stream processing platforms 21.

The node number is the number of nodes that make up a series of node groups that includes the largest number of nodes among nodes included in partial pipelines.

As a result, since the pipeline 100 is divided so as to reduce the number of stages per machine, the consumption of memory resources as a whole may be reduced, saving the installation cost of the pipeline 100.

The node number is determined according to a value of a stage length, which is set equally in each of the partial pipelines.

As a result, since the pipeline 100 is divided so as to average the number of stages per machine, the consumption of memory resources as a whole may be reduced, saving the installation cost of the pipeline 100.

The pattern calculation unit 112 re-determines the division position when the amount of change between the current amount of communication and the amount of communication at the timing of arrangement of the pipeline 100 after the previous division is equal to or greater than a threshold value.

As a result, the optimum division position of the pipeline 100 may be calculated even when the amount of communication between nodes changes depending on the day of the week or a time zone.

**Claims**

1. A method of determining a pipeline division position, the method comprising:

   receiving, by a computer, first information on a pipeline that includes a plurality of nodes that represent arithmetic operations, and second information on an amount of communication between nodes at each of a plurality of division positions at which the pipeline is divided; and
   selecting a division pattern from a plurality of division patterns, each of which includes at least one division position, based on the amount of communication at the at least one division position included in each of the division patterns and a node number of each of partial pipelines after division in each of the division patterns.

2. The method according to claim 1, wherein
   the node number is a number of nodes that make up a series of node groups that includes a largest number of nodes among nodes included in the partial pipelines.

3. The method according to claim 1, wherein
   the node number is determined according to a value of a stage length, which is set equally in each of the partial pipelines.

4. The method according to any one of claims 1 to 3, further comprising:
   performing the selecting again when the amount of communication changes by a predetermined threshold value or more from the communication amount at a previous time of the selecting.

5. The method according to any one of claims 1 to 4, further comprising:
   presenting two or more of the plurality of division patterns to a user to prompt the user to select one of the presented division patterns.

6. A program that causes a computer to execute a process, the process comprising:

   receiving first information on a pipeline that includes a plurality of nodes that represent arithmetic operations, and second information on an amount of communication between nodes at each of a plurality of division positions at which the pipeline is divided; and

selecting a division pattern from a plurality of division patterns, each of which includes at least one division position, based on the amount of communication at the at least one division position included in each of the division patterns and a node number of each of partial pipelines after division in each of the division patterns.

7. The program according to claim 6, wherein
the node number is a number of nodes that make up a series of node groups that includes a largest number of nodes among nodes included in the partial pipelines.

8. The program according to claim 6, wherein
the node number is determined according to a value of a stage length, which is set equally in each of the partial pipelines.

9. The program according to any one of claims 6 to 8, the process further comprising:
performing the selecting again when the amount of communication changes by a predetermined threshold value or more from the communication amount at a previous time of the selecting.

10. The program according to any one of claims 6 to 9, the process further comprising:
presenting two or more of the plurality of division patterns to a user to prompt the user to select one of the presented division patterns.

11. An information processing apparatus, comprising:

a memory; and
a processor coupled to the memory and the processor configured to:

receive first information on a pipeline that includes a plurality of nodes that represent arithmetic operations, and second information on an amount of communication between nodes at each of a plurality of division positions at which the pipeline is divided; and
select a division pattern from a plurality of division patterns, each of which includes at least one division position, based on the amount of communication at the at least one division position included in each of the division patterns and a node number of each of partial pipelines after division in each of the division patterns.

12. The information processing apparatus according to claim 11, wherein
the node number is a number of nodes that make up a series of node groups that includes a largest number of nodes among nodes included in the partial pipelines.

13. The information processing apparatus according to claim 11, wherein
the node number is determined according to a value of a stage length, which is set equally in each of the partial pipelines.

14. The information processing apparatus according to any one of claims 11 to 13, wherein
the processor is further configured to:
perform the selection of a division pattern again when the amount of communication changes by a predetermined threshold value or more from the communication amount at a previous time of the selection.

15. The information processing apparatus according to any one of claims 11 to 14, wherein
the processor is further configured to:
present two or more of the plurality of division patterns to a user to prompt the user to select one of the presented division patterns.

Amended claims in accordance with Rule 137(2) EPC.

1. A computer-implemented method of determining a pipeline division position for a pipeline (100) to be divided into partial pipelines separately arranged on a plurality of machines (21), the method comprising:

receiving (S1) first information (142) on the pipeline that includes a plurality of nodes that represent arithmetic operations, and second information (141) on an expected amount of communication between nodes at each of a plurality of division positions at which the pipeline is to be divided;

generating (S2) a model of the pipeline based on the first information and the second information;

calculating (S3), based on the model, an optimum division pattern including at least one of the plurality of division positions, the optimum division pattern minimizing an energy value indicating an efficiency of the division, wherein the energy value of the optimum division pattern is based on a sum of a total amount of communication to be generated and a number of nodes indicating a maximum length of the partial pipelines; and

executing (S4) an arrangement of the pipeline based on the optimum division pattern.

2. The method according to claim 1, further comprising:

determining (S12:YES) that the model is to be updated when the expected amount of communication changes by a predetermined threshold value or more, and

performing the calculating (S13) of the optimum division pattern and the executing (S14) of the arrangement again.

3. The method according to claim 1 or claim 2, wherein an approximate optimum division pattern is found by a meta-heuristic optimization algorithm.

4. The method according to any one of claims 1 to 3, wherein the energy value of the optimum division pattern is also based on optimization parameters, the optimization parameters being determined depending on which of a reduction of a communication load and a reduction of a memory load is to be emphasized.

5. A program that, when read and executed by a computer, causes the computer to execute a process according to any one of claims 1 to 4

6. An information processing apparatus (1) for determining a pipeline division position for a pipeline (100) to be divided into partial pipelines separately arranged on a plurality of machines, comprising:

a memory (12; 14); and

a processor (11) coupled to the memory and the processor configured to:

receive first information (142) on the pipeline that includes a plurality of nodes that represent arithmetic operations, and second information (141) on an expected amount of communication between nodes at each of a plurality of division positions at which the pipeline is to be divided;

generate a model of the pipeline based on the first information and the second information;

calculate, based on the model, an optimum division pattern including at least one of the plurality of division positions, the optimum division pattern minimizing an energy value indicating an efficiency of the division, wherein the energy value of the optimum division pattern is based on a sum of a total amount of communication to be generated and a number of nodes indicating a maximum length of the partial pipelines; and

execute an arrangement of the pipeline based on the optimum division pattern.

7. The information processing apparatus (1) according to claim 6, wherein
the processor (11) is further configured to:

determine that the model is to be updated when the expected amount of communication changes by a predetermined threshold value or more, and

perform the calculating of the optimum division pattern and the executing of the arrangement again.

8. The information processing apparatus (1) according to claim 6 or claim 7, wherein the processor (13) is configured to find an approximate optimum division pattern by a meta-heuristic optimization algorithm.

9. The information processing apparatus (1) according to any one of claims 6 to 8, wherein the energy value of the optimum division pattern is also based on optimization parameters, the optimization parameters being determined depending on which of a reduction of a communication load and a reduction of a memory load is to be emphasized.

FIG. 1

DISTRIBUTED STREAM PROCESSING PLATFORM

SERVICE #2:
DANGER ROAD WORST RANKING

VEHICLE → filter → OVER-SPEED VEHICLE → group By → ROAD → reduce → OVER-SPEED FREQUENT OCCURRENCE ROAD RANKING

SERVICE #1: OVER-SPEED VEHICLE EXTRACTION

map

DRIVING DANGER LV → map → INSURANCE PREMIUM

SERVICE #3:
DRIVING SCORE
CALCULATION

SERVICE #4:
INSURANCE PREMIUM
CALCULATION

# FIG. 2

A1

```
        DATA → ARITHMETIC → DATA → ARITHMETIC → DATA → ARITHMETIC → DATA
                OPERATION          OPERATION          OPERATION

                              ARITHMETIC
                              OPERATION
                                         DATA → ARITHMETIC → DATA
                                                OPERATION
```

ARRANGEMENT

| STAGE #1 | STAGE #2 | STAGE ##3 | STAGE ##4 |
|----------|----------|-----------|-----------|

MACHINE #1  DATA → PROCESSING → MEMORY SECURE → PROCESSING

MACHINE #2  DATA → PROCESSING → MEMORY SECURE → PROCESSING

MACHINE #3  DATA → PROCESSING → MEMORY SECURE → PROCESSING

A2

# FIG. 3

# FIG. 4

**INFORMATION PROCESSING APPARATUS** — 1

- 14 STORAGE DEVICE
- 11 CPU
- 12 MEMORY UNIT
- 13 DISPLAY CONTROL UNIT
- 130 (display)
- 15 INPUT IF
- 16 EXTERNAL RECORDING MEDIUM PROCESSING UNIT
- 17 COMMUNICATION IF
- 151 (mouse)
- 152 (keyboard)
- 160 (USB drive)
- TO EXTERNAL DEVICE

# FIG. 5

1

PATTERN CALCULATION UNIT ~112

ARRANGEMENT INSTRUCTION BASED ON OPTIMUM DIVISION PATTERN

113~ PROCESSING PLATFORM CONTROL UNIT

ARRANGEMENT EXECUTION

21~ DISTRIBUTED STREAM PROCESSING PLATFORM #1

21~ DISTRIBUTED STREAM PROCESSING PLATFORM #2

ARRANGEMENT EXECUTION

. . .

ARRANGEMENT EXECUTION

21~ DISTRIBUTED STREAM PROCESSING PLATFORM #N

WEIGHTED DIRECTED GRAPH

GRAPH GENERATION UNIT ~111

WEIGHT UPDATE

LOAD STATUS ACQUISITION

WEIGHT DATA

141

PIPELINE INFORMATION

142

FIG. 6

$$E(C_1) = 19 + 3 = 22$$

FIG. 7

$$E(C_2) = 9 + 2 = 11$$

FIG. 8

DIVISION PATTERN SELECTION SCREEN

$$E(C_1) = 19 + 3 = 22$$

$$E(C_2) = 9 + 2 = 11$$

132 ⊙ DIVISION PATTERN C1          132 ○ DIVISION PATTERN C2

133 DIVISION PROCESS EXECUTION

# FIG. 9

EXAMPLE OF MEANINGLESS
DIVISION PATTERN
STAGE BACKFLOW OCCURRENCE

# FIG. 10

INITIAL ARRANGEMENT PHASE

START

S1 — INPUT PIPELINE, PREDICTED AMOUNT OF COMMUNICATION, AND OPTIMIZATION PARAMETERS

S2 — GENERATE DIRECTED GRAPH

S3 — GENERATE OPTIMUM DIVISION PATTERN

S4 — EXECUTE ARRANGEMENT

END

# FIG. 11

Europäisches
Patentamt

European
Patent Office

Office européen
des brevets

**EUROPEAN SEARCH REPORT**

Application Number

EP 21 16 1994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Eidenbenz Raphael ET AL: "Task Allocation for Distributed Stream Processing (Extended Version)", <br><br>, <br>22 January 2016 (2016-01-22), pages 1-11, XP055826304, <br>Retrieved from the Internet: <br>URL:https://arxiv.org/pdf/1601.06060.pdf <br>[retrieved on 2021-07-21] <br>* the whole document * <br>----- | 1-15 | INV. <br>G06F9/50 |

TECHNICAL FIELDS
SEARCHED (IPC)

G06F

The present search report has been drawn up for all claims

| Place of search | Date of completion of the search | Examiner |
|---|---|---|
| The Hague | 21 July 2021 | Wirtz, Hanno |

EPO FORM 1503 03.82 (P04C01)

**EP 3 920 027 A1**

**Patent documents cited in the description**

- WO 2017104072 A
- WO 2014041673 A